# EUROPEAN PATENT SPECIFICATION

(11) **EP 2 166 242 B1**
(45) Date of publication and mention of the grant of the patent: **30.03.2011**
(21) Application number: 08016489.0
(22) Date of filing: 18.09.2008
(51) Int. Cl.: F16C 33/66, F16C 33/76, F16N 7/18, F16J 15/16, F03D 11/00

(54) **oil lubricated bearing device with oil scraper**
Öl geschmierte Lageranordnung mit Ölabstreifer
Dispositif de roulement lubrifié par huile avec racleur d'huile

(43) Date of publication of application: 24.03.2010
(73) Proprietor: Siemens Aktiengesellschaft, 80333 München (DE)
(72) Inventor: Soerensen, Henning, 7330 Brande (DK)

(56) References cited:
- EP-A1- 1 295 677
- WO-A-81/03051
- WO-A-2007/034305
- DE-A1- 4 132 780
- DE-B3-102005 003 203
- GB-A- 691 726
- US-A- 1 632 188
- US-A- 5 601 155

## Description

### Field of invention

The present invention relates to the field of wind turbines. Furthermore, the present invention relates to an oil lubricated bearing device for supporting a rotating shaft.

### Art Background

In conventional wind turbines oil lubricated bearings may be applied. Such oil lubricated bearings may be sealed to prevent a loss of lubricant. The seals for the bearing may be rings made of an elastomer or of a felt. Because the wind turbine components may be able to rotate relatively to each other, the seal may not be made completely tight so that a frictionless rotation may be provided. Thus, a certain amount of leakage may occur. The leakage may be reduced by using a seal element that is pressed against the rotatable parts of the bearing. This may in general increase the wear and therefore the maintenance costs.

WO 2007/034305 A1 describes a combined labyrinth seal and screw-type gasket bearing sealing arrangements. A bearing sealing arrangement for rotating machines uses a radially-acting labyrinth seal to minimize bearing lubricant leakage and an axially-acting screw-type gasket to return the fluid that escapes through the labyrinth seal from the bearing. The labyrinth seal uses rings with plastic wear surfaces formed about an internal metal band and plastic elements forming corresponding profiles on the ends of the metal band so that the profiles interlock when overlapped to form the ring.

US 5,601,155 A discloses a journal bearing with a disk for transmitting lubricant. The journal bearing is lubricated by the disk on a shaft which sweeps through oil in a sump for picking up oil and transmitting it upwardly in the direction of rotation of the disk to above an oil inlet for a bearing. Moreover, it is disclosed a scraper unit mounted in a housing adjacent the disk for scraping off oil from a peripheral surface of the disk to feed the oil to the bearing.

US 1,632,188 discloses a windmill construction comprising a shaft, a reservoir and a floatable oil scraper. The oil scraper ensures the return of oil from an outer end of the shaft to the reservoir. The floatable oil scraper comprises an inclined scraper portion which shears the oil from the shaft and causes it to drip down into the passage which returns it to the main oil reservoir. A coil compression spring is provided for holding the oil scraper up against the lower side of the shaft.

### Summary of the Invention

It may be an object of the present invention to provide an oil lubricated bearing device for a proper prevention of leakage of the lubricant.

The object may be solved by the subject-matter of the independent claims, in particular by an oil lubricated bearing device and a method of sealing an oil lubricated bearing device.

According to the invention, an oil lubricated bearing device according to claim 1 is described.

According to the invention , a method of sealing an oil lubricated bearing device according to claim 11 is described.

By applying at least one scraper element along a surface of the rotary shaft, a lubricant may be scraped from the shaft and return to the bearing itself or to e.g. an oil sump of the bearing.

The term "scraper element" may describe a rigid element that comprises a sharp edge, a flange and/or a slanted edge that may be in contact with the rotating shaft. For example, a conventional sealing ring is preventing the oil to pass the seal by creating a very narrow gap between the shaft and the seal. Instead, the scraper element is scraping the oil off the shaft and let the oil drip down into a sump device. From the oil or lubricating sump the oil or lubricant may flow back into the central bearing housing or to an oil or lubricant circulating system. Thus, a lubricant may be scraped from the surface of the rotating shaft. Due to the small contact pressure between the scraper element and the rotating shaft, friction loss may be reduced. Furthermore, due to the small contact pressure the wear and therefore the maintenance costs may also be reduced. The scraper element may cover the surface of the rotating shaft only partially. The scraper element may be mounted to the bearing device without providing a rotational movement. Due to the rotation of the rotating shaft, the scraper element may scrape off the lubricant. The scraper element may be placed in the vicinity of a sealing element so that it may be possible to scraping off the lubricant that passes the sealing device. The scraper element may further be adapted to guide the scraped oil to a desired location, for instance a lubricant sump device. This may be possible by the sharp edge and/or the slanted edge of the scraper element with which the scraped oil may be scraped off from the rotating shaft and then guided along a surface of the non rotating element, e.g. along the scraper element, to the desired location.

Lubricant substances may be for instance oil, synthetic oil or other substances that are adapted for providing lubricating characteristics between the bearing device and the rotating shaft.

The rotating shaft may be installed into a wind turbine for transmitting rotating energy from wind turbine blades to a generator. Furthermore, the rotating shaft may be installed for providing a rotation between a nacelle of a wind turbine and a wind turbine tower. Therefore, the rotating shaft may comprise a diameter of (600 mm or larger), and the sealing device, in particular the scraper element, a respective diameter.

According to the invention , the scraper element is adapted for being pressed against an end plate of the bearing device in such a way that the scraper block is guided by the end plate.

An end plate may be a separation element between an outer environment of the bearing and the interior of the bearing. Under the term "substance" for instance lubricants, oil or as well dust or other particle may be understood. Thus, the scraper element may be adapted for scraping off lubricant from the rotating shaft.

According to the invention , the scraper element comprises a trapezoid shape wherein the short side of the trapezoid shape comprises an axial flange in an axial direction of the rotating shaft. The axial flange is adapted for being pressed against the end plate. By the short side of the trapezoid shape the shorter side of the two parallel lines of the trapezoid cross-section or surface shape may be meant. The trapezoid shape is adapted to improve the scrapping off of the oil. Furthermore, the trapezoid shape also may be adapted for guiding and delivering the scraped off oil e.g. down into the sump device. Thus, the oil may not need to flow around the scraping element and onto the shaft again.

According to a further exemplary embodiment, the sealing device further comprises a radial spring. The radial spring is adapted for pressing the scraper element in a radial direction relative to the rotating shaft.

The radial direction may describe a direction that is pointed to a centre point or to the vicinity of the centre point of the rotating shaft. Thus, by the exemplary embodiment, the radial spring comprises a spring force that acts in radial direction and thus may press the scraper element to the surface of the rotating shaft. By pressing the scraper element against the surface of the rotating shaft, lubricants or other substances may be scraped off.

According to a further exemplary embodiment, the sealing device further comprises an axial spring. The axial spring is adapted for pressing the scraper element in an axial direction relatively to the rotating shaft. An axial direction may extend parallel to the rotating axis of the rotating shaft. Thus, by the axial spring, the scraper element may be pressed for instance against bearing housing elements such as the end plates or the like. Thus, lubricants or substances that are flowing along the housing elements may be guided down along the inner bearing cover or housing. The axial spring may also assure the right position and angle of the scraper element relatively to the rotating shaft and the housing elements, so that the lubricant may be scraped off and guided along the surface of the scraper element.

According to a further exemplary embodiment, the scraper element comprises a radial flange in radial direction to the rotating shaft. The radial flange comprises a curved shape in circumferential direction of the rotating shaft. The curvature of the curved shape matches with the curvature of the rotating shaft. Thus, the scraper element provides with the radial flange an adaption to the shape of the rotating shaft so that a proper contact may be provided.

According to a further exemplary embodiment, the scraper element comprises a scraper material, wherein the hardness of the scraper material is lower than a hardness of a material of the rotating shaft. The hardness may be defined by Bri- nell, Vickers, Knoop or Rockwell hardness. Thus, wear of the rotating shaft caused by the scraper element may be reduced or may be avoided.

According to a further exemplary embodiment, the scraper material comprises a polyamide material.

According to a further exemplary embodiment, a bearing device for supporting the rotating shaft is provided, wherein the bearing device comprises the sealing device as described above. Furthermore, the bearing device comprises an inner end plate and an outer end plate. The inner end plate and the outer end plate are adapted for providing an annular cavity around the rotating shaft. The sealing device is adapted for being installed into the annular cavity.

The inner end plate and the outer end plate each may form an end plate of the bearing device as described above. The inner end plate may be located in the vicinity of rolling elements or of inner race of the bearing element and the outer end plate may be spaced from the inner end plate along the rotating axis in axial direction. Thus, between the spacing of the inner end plate and the outer end plate along the rotating axis, the annular cavity may be formed. If the sealing device is located in the annular cavity, the sealing device may be protected against substances and dust particles from outside by the outer end plate. Thus, the sealing device may only be provided for scraping oil from the rotating shaft

According to a further exemplary embodiment, the bearing device further comprises a felt ring seal. The felt ring seal is adapted for being located into the annular cavity. By locating the felt ring seal into the annular cavity, the felt ring seal may reduce a leakage of lubricant between the inner end plate and the annular cavity or may also prevent an input of substances or dust from outside, in particular from the outer end plate into the annular cavity. Thus, a pre-sealing may be provided dust or other substances from entering the annular cavity, so that wear of the surface of the rotating shaft or the scraper element may be prevented.

According to a further exemplary embodiment, the bearing device further comprises a lubricant sump device. The annular cavity is adapted for being connected to the lubricant sump device for returning the scraped off lubricant from the sealing device to the lubricant sump device. Moreover, the scraper element is adapted for scraping off the lubricant and additionally for guiding the lubricant in a direction to the sump device. The lubricant flows for instance along the slanted edge or the surface of the scraper element and the lubricant may be driven by the rotation of the rotating shaft. Thus, a circulation of the scraped off lubricant may be provided so that a lubricant that exits the bearing device may be scraped off and may be put back into the leakage sump device. In the lubricant sump device the lubricant is stored and the bearing device receives therefrom the lubricant for lubricating the bearing. Thus, loss of lubricant may be prevented and by the flow back of the lubricant, a loss of lubricant is reduced and therefore the maintenance costs and maintenance time periods may be reduced.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

In the following, exemplary embodiments of the present invention will be specified for further explanation and for a better understanding with reference to the attached drawings.
Fig. la shows a schematic view of an exemplary embodiment of the sealing device;
Fig. 1b shows a top view of the exemplary embodiment of the sealing device of Fig. 1a;
Fig. 2 shows a schematic view of an exemplary embodiment of the scraper element;
Fig. 3 shows a schematic view of a vertical section through a rotating shaft including a bearing device according to an exemplary embodiment of the invention;
Fig. 4 shows a scaled up view of the bearing device of Fig. 3, showing a sealing device according to an exemplary embodiment of the invention;
Fig. 5 shows an abstract and schematic view of an exemplary embodiment of the sealing device.

### Detailed Description

The illustration in the drawing is schematically. It is noted that in different figures, similar or identical elements are provided with the same reference signs or with reference signs, which are different from the corresponding reference signs only within the first digit.

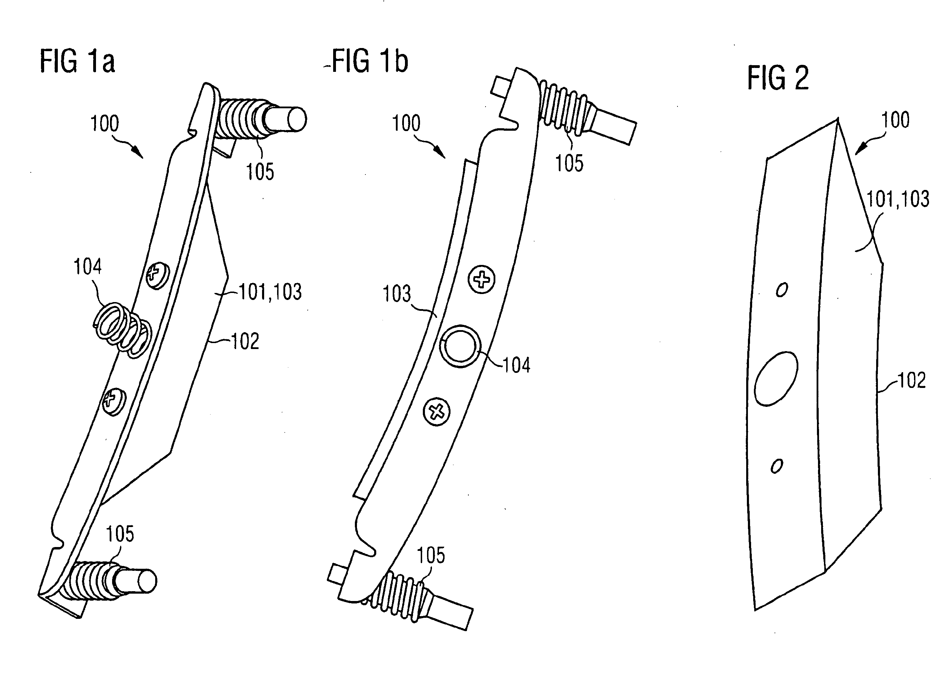

Fig. 1 shows a sealing device for sealing a bearing device 300, in particular an oil lubricated bearing device 300. The sealing device 100 comprises a scraper element 101. The scraper element 101 is adapted for being supported by the bearing device 300. The scraper element 101 is adapted for being pressed against the rotating shaft 301 which is supported by the bearing device 300 in such a way that lubricant from rotating shaft 301 is scraped off.

The sealing device according to Fig. 1a describes furthermore a radial flange 103 in a radial direction with respect to the rotating shaft 301. The radial flange 103 comprises a curved shape in a circumferential direction. The curvature of the curved shape matches with the curvature of the rotating shaft 301.

In Fig. 1a and Fig. 1b an axial spring 104 is shown. The axial spring 104 is adapted for pressing the scraper element 101 in an axial direction relatively to the rotating shaft 301. Furthermore, a radial spring 105 is shown, wherein the radial spring 105 is adapted for pressing the scraper element 101 in a radial direction relatively to the rotating shaft 301.

In Fig. 1b a top view of the sealing device according to Fig. 1a is shown. In the top view, the radial flange 103 comprising a curved shape in circumferential direction. The curvature of the curved shape of the radial flange 103 may match with the curvature of the rotating shaft 301.

The scraper element 101 may further comprise, as illustrated in Fig. 1a, 1b, a mounting bracket for an easier mounting for instance to a bearing device. Thus, the scraper element 101 may be provided exchangeable. I.e. the scraper element 101 may be exchanged without demounting the whole bearing device 300 from the rotating shaft 301.

Furthermore, Fig. 1a illustrates that the scraper element 101 may provide a trapezoid shape wherein its short side of the trapezoid shape comprises an axial flange 102. The axial flange 102 may be pressed against an end plate of a bearing device 300 in order to scrape substances from the inner end plate 303 or the outer end plate 304 plate.

Fig. 2 shows a separate view of the scraper element 101 including the axial flange 102 and the radial flange 103.

The scraper element 101 may be made of a material which can be manufactured with a very smooth surface so that the friction between the oil scraper elements 101 and the rotating shaft 301 may be reduced. A material of the scraper element 101 may be smoother or softer compared to the material of the rotating shaft 301. I.e. the material of the rotating shaft 301 may be harder than the hardness of the material of the scraper element 101. Thus, wear of the shaft may be reduced. A suitable material for the scraper element 101 may be for instance polyamide.

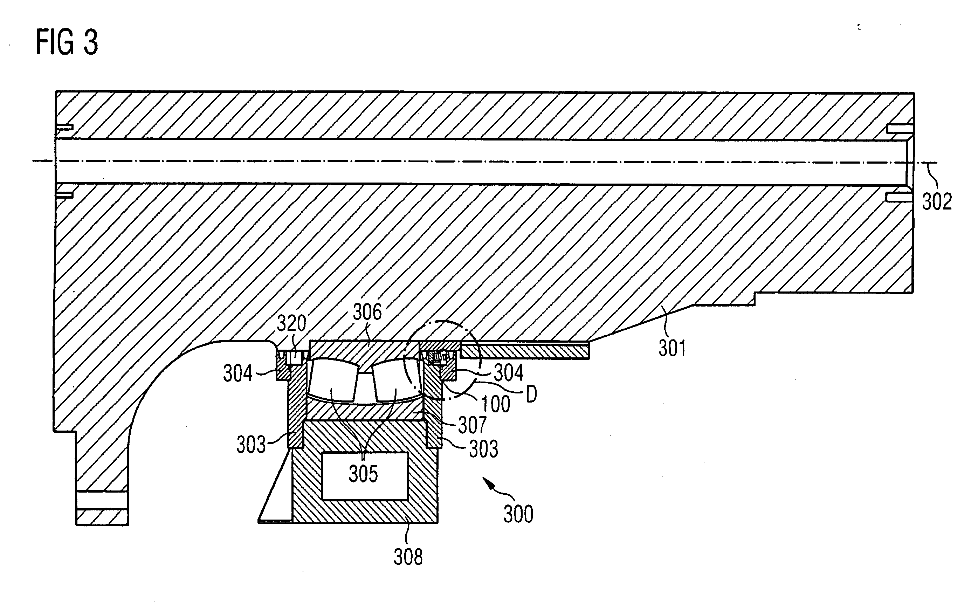

Fig. 3 shows a bearing device that is mounted to a rotating shaft 300 and that comprises a sealing device 100. The bearing device 300 shown in Fig. 3 may be a spherical roller bearing that is lubricated for instance with oil. However, the invention is not limited to this type of rotating bearing 300, i.e. also other bearing devices 300 may be appreciable to the present invention.

The bearing device 300 comprises for instance rolling elements 305 that are supported by inner race 306 and outer race 307. The inner race 306 may be fixed to the surface of the rotating shaft 301. Furthermore, the bearing device 300 is limited by the inner end plate 303 and the outer end plate 304. Between the inner end plate 303 and the outer end plate 304 an annular cavity 401 may be provided. There may be a drain from the cavity into the bearing housing or to an external tank. Into this annular cavity 401 the sealing device 100 may be located. Furthermore, the outer race 307 may be supported by a bearing housing 308. On both sides of the bearing device 300 a sealing device 100 and a further sealing device 320 may be located for an improved sealing.

The rotating shaft 301 is further adapted for rotating around a rotating axis 302. The joint between the inner end plate 303 and the bearing housing 10 may be static so that a conventional sealing may be used to provide an oil-tight sealing. The rotating shaft 301 may be adapted to rotate and therefore the sealing device 100 may prevent the lubricants, e.g. oil, in the bearing from escaping through a gap between the inner end plate 303 and the outer end plate 304 and the rotating shaft 301 while at the same time allowing the rotating shaft 301 to rotate.

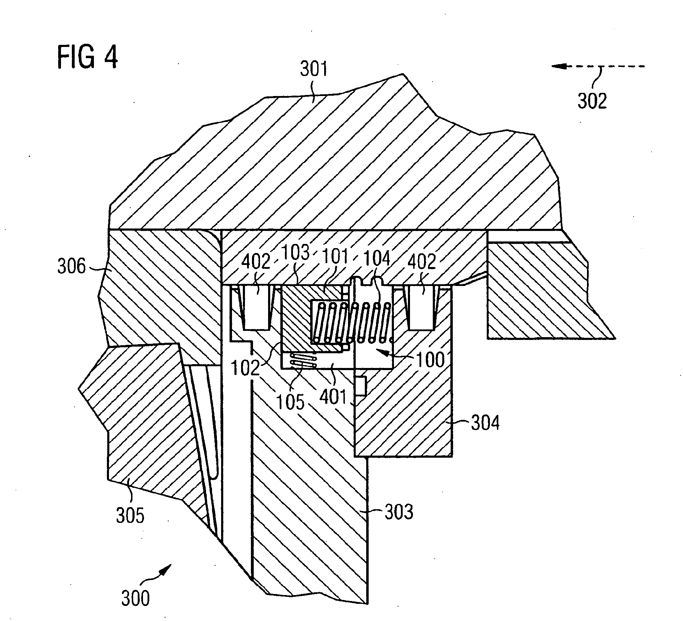

Fig. 4 shows a detailed view of the sealing device 100 that is circle marked with a D in Fig. 3.

In Fig. 4, the sealing device 100 is shown that is mounted to the bearing device 300. The sealing device 100 is mounted in the annular cavity 401 that is provided by the inner end plate 303 and the outer end plate 304. The axial spring 104 is shown that presses the scraper element 101 against the inner end plate 303 in the axial direction, i.e. parallel to the rotating axis 302. Furthermore, a radial spring 105 is provided in the annular cavity 401 that is adapted for pressing the scraper element 101 in radial direction to the rotating axis 302.

Furthermore, a felt sealing ring 402 may be located between the inner end plate 303 and the inner race 306 and/or another felt ring seal 402 may be located between the rotating shaft 301 of the bearing device 300 and the outer end plate 304.

As shown in Fig. 4, the radial flange 103 of the scraper element 101 that is pressed against the rotating shaft 301 in radial direction. Additionally the axial flange 102 of the scraper element 101 may be pressed by the axial spring 104 in a direction parallel to the rotating axis 302 against the inner end plate 303. The felt ring seals 402 may be located into a groove in the inner end plate 303 and/or the outer end plate 304, so that a gap between the inner end plate 303 and the outer plate 304 and the rotating shaft 301 may be sealed against oil leakage. Because the rotating shaft 301 is rotating, the felt ring seal 402 may not be completely tight so that some oil may be passed the felt ring seal 402 along the surface of the rotating shaft 301.

The outer end plate 304 may also comprise a felt ring seal 402 into a groove, so that a protection against dust particles or other substances from the surroundings may be prevented to input the annular cavity 401.

The inner end plate 301 and the outer end plate 402 may provide the annular cavity 401 which may surround the entire rotating shaft 301. Furthermore, the bearing device 300 or in particular the annular cavity 401 may be connected to a lubricated sump device of the bearing device 300 (not shown). Into the annular cavity 401 the oil scraper element 101 may be placed. A concave phase of the scraper element 101, i.e. the curvature of the curved shape of the radial flange 103 of the scraper element 101, may be pressed against the rotating shaft 301 by the radial spring 105 which spring force may act in radial direction to the rotating axis 302 of the rotating shaft 301. The same time the scraper element 101 may be pressed against e.g. the inner end plate 303 by axial springs 104 which spring force acts in the axial direction of the rotating axis 302 of the rotating shaft 301. The scraper element 101 may comprise a trapezoid shape wherein the short side of the parallel lines of the trapezoid shape may form an axial flange that is pressed to one of the end plates, in particular the inner end plate 303.

The scraper element 101 may be mounted in a lower part of the bearing device 301 but above an oil level or a lubricated level of the lubricated sump device that may be placed at the bottom of the bearing device 300. Furthermore, a further sealing device 320 including further scraper elements 101 may be provided that may be placed to an opposite side of the bearing device 300.

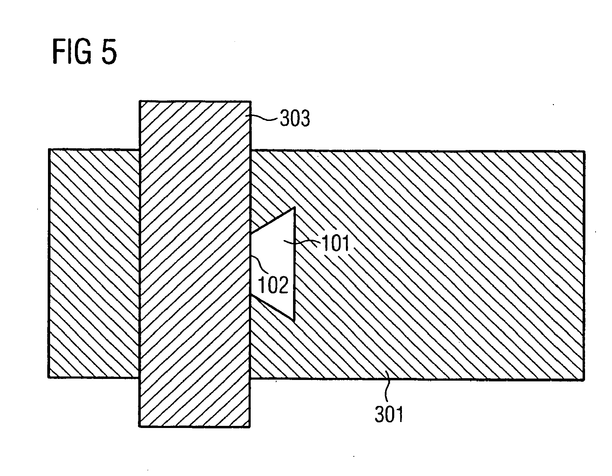

Fig. 5 shows a simplified illustration of the action of the scraper element 101 wherein the rotating shaft 301, the scraper element 101 and part of the inner end plate 303 are shown. The scraper element 101 may be pressed tightly against the rotating shaft 301. When the shaft 301 rotates, leaking lubricate through the felt ring seal 402 in the inner end plate 303 will be scraped off from the rotating shaft 301 by the slanting edge of the scraper element 101, i.e. the radial flange 103 of the scraper element 101, and the lubricant may be guided towards the inner end plate 303, e.g. by the scraper element 101, from where it may be returned to the lubricated sump device at the bottom of the bearing device 300, for instance under the influence of gravity.

Thus, the lubricant which has been led through the bearing seals along the surface of a rotating shaft 30.1 may be scraped off from the rotating shaft 301 and may be returned to the lubricating sump device of the bearing device 300. Thus, unwanted loss of lubricate substances may be prevented.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. An oil lubricated bearing device for supporting a rotating shaft (301) of a wind turbine, the oil lubricated bearing device (300) comprising
a sealing device for sealing the oil lubricated bearing device (300), the sealing device comprising a scraper element (101);
wherein the scraper element (101) is adapted for being supported by the bearing device (300);
wherein the scraper element (101) is adapted for being pressed against the rotating shaft (301) which is supported by the bearing device (300) in such a way that lubricant from the rotating shaft (301) is scraped off;
wherein the scraper element (101) is adapted for being pressed against an end plate of the oil lubricated bearing device (300) in such a way that the scraper element (101) is guided by the end plate;
**characterized in that**
the scraper element comprises a trapezoid shape;
wherein a short side of the trapezoid cross-section comprises an axial flange (102) in axial direction to the rotating shaft (301), wherein the axial flange (102) is adapted for being pressed against the end plate.

2. The oil lubricated bearing device of claim 1;
wherein the sealing device further comprises a radial spring (105);
wherein the radial spring (105) is adapted for pressing the scraper element (101) in a radial direction relatively to the rotating shaft (301).

3. The oil lubricated bearing device of claim 1 or 2;
wherein the sealing device comprises an axial spring (104);
wherein the axial spring (104) is adapted for pressing the scraper element (101) in an axial direction relatively to the rotating shaft (301).

4. The oil lubricated bearing device of one of the claims 1 to 3;
wherein the scraper element (101) comprises a radial flange (103) in radial direction to the rotating shaft (301);
wherein the radial flange (103) comprises a curved shape in circumferential direction of the rotating shaft (301);
wherein the curvature of the curved shape matches with the curvature of the rotating shaft (301).

5. The oil lubricated bearing device of one of the claims 1 to 4;
wherein the scraper element (101) comprises a scraper material;
wherein the hardness of the scraper material is lower than a hardness of a material of the rotating shaft(301).

6. The oil lubricated bearing device of claim 5;
wherein the scraper material comprises polyamid material.

7. The oil lubricated bearing device of one of the claims 1 to 6, further comprising an inner end plate (303), and
an outer end plate (304);
wherein the inner end plate (303) and the outer end plate (304) are adapted for providing an annular cavity (401) around the rotating shaft (301);
wherein the sealing device (100) is adapted for being installed into the annular cavity (401).

8. The oil lubricated bearing device of claim 7; further comprising:
a felt ring seal (402);
wherein the felt ring seal (402) is adapted for being located into the annular cavity (401) and adapted for preventing a leakage of lubricant between at least one of the end plates and the rotating shaft (301).

9. The oil lubricated bearing device of claim 7 or 8, further comprising:
a lubricant sump device;
wherein the annular cavity (401) is adapted for being connected to the lubricant sump device for returning the scraped off lubricant from the sealing device (100) to the lubricant sump device.

10. The oil lubricated bearing device of one of the claims 7 to 9, further comprising:
a further sealing device (320) according to one of the claims 1 to 6;
a further inner end plate (303); and
a further outer end plate (304);
wherein the further inner end plate (303) and the further the outer end plate (304) are adapted for providing a further annular cavity (401) around the rotating shaft (301); and
wherein the further sealing device (320) is adapted for being installed into the further annular cavity (401).

11. Method of sealing an oil lubricated bearing device (300) of a wind turbine, the method comprising:
supporting a scraper element (101) by the bearing device (300);
pressing the scraper element (101) against a rotating shaft (301) that is supported by the bearing device (300);
scraping lubricant from the rotating shaft (301) by the scraper element (101),
wherein the scraper element (101) is adapted for being pressed against an end plate of the bearing device (300) in such a way that the scraper element (101) is guided by the end plate;
wherein the scraper element (101) comprises a trapezoid shape;
wherein a short side of the trapezoid cross-section comprises an axial flange (102) in axial direction to the rotating shaft (301); and
wherein the axial flange (102) is adapted for being pressed against the end plate.

## Patentansprüche

1. Ölgeschmierte Lageranordnung zum Lagern einer rotierenden Welle (301) einer Windturbine, wobei die ölgeschmierte Lageranordnung (300) folgendes umfasst:
eine Dichtungsanordnung zum Abdichten der ölgeschmierten Lageranordnung (300), wobei die Dichtungsanordnung ein Abstreiferelement (101) umfasst;
wobei das Abstreiferelement (101) dafür ausgelegt ist, von der Lageranordnung (300) gehalten zu werden;
wobei das Abstreiferelement (101) dafür ausgelegt ist, in einer derartigen Weise gegen die rotierende Welle (301), die von der Lageranordnung (300) gelagert wird, gepresst zu werden, dass Schmiermittel von der rotierenden Welle (301) abgestreift wird;
wobei das Abstreiferelement (101) dafür ausgelegt ist, in einer derartigen Weise gegen eine Endplatte der ölgeschmierten Lageranordnung (300) gepresst zu werden, dass das Abstreiferelement (101) von der Endplatte geführt wird;
**dadurch gekennzeichnet, dass**
das Abstreiferelement eine trapezartige Form aufweist;
wobei eine kurze Seite des trapezförmigen Querschnitts einen axialen Flansch (102) in axialer Richtung zu der rotierenden Welle (301) umfasst, wobei der axiale Flansch (102) dafür ausgelegt ist, gegen die Endplatte gepresst zu werden.

2. Ölgeschmierte Lageranordnung gemäß Anspruch 1;
wobei die Dichtungsanordnung ferner eine Radialfeder (105) umfasst;
wobei die Radialfeder (105) dafür ausgelegt ist, das Abstreiferelement (101) in radialer Richtung bezogen auf die rotierende Welle anzupressen.

3. Ölgeschmierte Lageranordnung gemäß Anspruch 1 oder 2;
wobei die Dichtungsanordnung eine Axialfeder (104) umfasst;
wobei die Axialfeder (104) dafür ausgelegt ist, das Abstreiferelement (101) in einer axialen Richtung bezogen auf die rotierende Welle (301) anzupressen.

4. Ölgeschmierte Lageranordnung gemäß einem der Ansprüche 1 bis 3;
wobei das Abstreiferelement (101) einen radialen Flansch (103) in radialer Richtung zu der rotierenden Welle (301) umfasst;
wobei der radiale Flansch (103) eine gekrümmte Form in einer Umfangsrichtung der rotierenden Welle (301) aufweist;
wobei der Krümmungsradius der gekrümmten Form dem Krümmungsradius der rotierenden Achse (301) entspricht.

5. Ölgeschmierte Lageranordnung gemäß einem der Ansprüche 1 bis 4;
wobei das Abstreiferelement (101) ein Abstreifermaterial umfasst;
wobei die Härte des Abstreifermaterials geringer ist als eine Härte eines Materials der rotierenden Welle (301).

6. Ölgeschmierte Lageranordnung gemäß Anspruch 5;
wobei das Abstreifermaterial ein Polyamidmaterial umfasst.

7. Ölgeschmierte Lageranordnung gemäß einem der Ansprüche 1 bis 6, die ferner folgendes umfasst:
eine innere Endplatte (303) und
eine äußere Endplatte (304);
wobei die innere Endplatte (303) und die äußere Endplatte (304) dafür ausgelegt sind, einen ringförmigen Hohlraum (401) rund um die rotierende Welle (301) herum bereitzustellen;
wobei die Dichtungsanordnung (100) dafür ausgelegt ist, in dem ringförmigen Hohlraum (401) installiert zu werden.

8. Ölgeschmierte Lageranordnung gemäß Anspruch 7, die ferner folgendes umfasst:
eine Filzringdichtung (402);
wobei die Filzringdichtung (402) dafür ausgelegt ist, in dem ringförmigen Hohlraum (401) angeordnet zu werden, und dafür ausgelegt ist, ein Austreten von Schmiermittel zwischen mindestens einer der Endplatten und der rotierenden Welle (301) zu verhindern.

9. Ölgeschmierte Lageranordnung gemäß Anspruch 7 oder 8, die ferner folgendes umfasst:
eine Schmiermittelsumpf-Anordnung;
wobei der ringförmige Hohlraum (401) dafür ausgelegt ist, mit der Schmiermittelsumpf-Anordnung verbunden zu sein, um das abgestreifte Schmiermittel von der Dichtungsanordnung (100) in die Schmiermittelsumpf-Anordnung zurückzuleiten.

10. Ölgeschmierte Lageranordnung gemäß einem der Ansprüche 7 bis 9, die ferner folgendes umfasst:
eine weitere Dichtungsanordnung (320) gemäß einem der Ansprüche 1 bis 6;
eine weitere innere Endplatte (303); und
eine weitere äußere Endplatte (304);
wobei die weitere innere Endplatte (303) und die weitere äußere Endplatte (304) dafür ausgelegt sind, einen weiteren ringförmigen Hohlraum (401) rund um die rotierende Welle (301) herum bereitzustellen; und
wobei die weitere Dichtungsanordnung (320) dafür ausgelegt ist, in dem weiteren ringförmigen Hohlraum (401) angeordnet zu werden.

11. Verfahren zum Abdichten einer ölgeschmierten Lageranordnung (300) einer Windturbine, wobei das Verfahren folgendes umfasst:
Halten eines Abstreiferelements (101) durch die ölgeschmierte Lageranordnung (300);
Anpressen des Abstreiferelements (101) an eine rotierende Welle (301), die von der ölgeschmierten Lageranordnung (300) gelagert wird;
Abstreifen von Schmiermittel von der rotierenden Welle (301) durch das Abstreiferelement (101),
wobei das Abstreiferelement (101) dafür ausgelegt ist, in einer derartigen Weise gegen eine Endplatte der ölgeschmierten Lageranordnung (300) gepresst zu werden, dass das Abstreiferelement (101) durch die Endplatte geführt wird;
wobei das Abstreiferelement (101) eine trapezartige Form aufweist;
wobei eine kurze Seite des trapezförmigen Querschnitts einen axialen Flansch (102) in axialer Richtung zu der rotierenden Welle (301) umfasst; und
wobei der axiale Flansch (102) dafür ausgelegt ist, gegen die Endplatte gepresst zu werden.

## Revendications

1. Dispositif de roulement lubrifié à l'huile pour supporter un arbre rotatif (301) d'une éolienne, le dispositif de roulement lubrifié à l'huile (300) comprenant
un dispositif d'étanchéité pour une étanchéisation du dispositif de roulement lubrifié à l'huile (300), le dispositif d'étanchéité comprenant un élément racleur (101);
dans lequel l'élément racleur (101) est adapté à être supporté par le dispositif de roulement (300) ;
dans lequel l'élément racleur (101) est adapté à être pressé contre l'arbre rotatif (301) qui est supporté par le dispositif de roulement (300) de telle façon qu'un lubrifiant provenant de l'arbre rotatif (301) est raclé ;
dans lequel l'élément racleur (101) est adapté à être pressé contre une plaque d'extrémité du dispositif de roulement lubrifié à l'huile (300) de telle façon que l'élément racleur (101) est guidé par la plaque d'extrémité;
**caractérisé en ce que**
l'élément racleur comprend une forme trapézoïdale;
dans lequel un petit côté de la section transversale trapézoïdale comprend un rebord axial (102) dans un sens axial vers l'arbre rotatif (301), dans lequel le rebord axial (102) est adapté à être pressé contre la plaque d'extrémité.

2. Dispositif de roulement lubrifié à l'huile selon la revendication 1,
dans lequel le dispositif d'étanchéité comprend en outre un ressort radial (105) ;
dans lequel le ressort radial (105) est adapté à presser l'élément racleur (101) dans un sens radial par rapport à l'arbre rotatif (301).

3. Dispositif de roulement lubrifié à l'huile selon la revendication 1 ou 2,
dans lequel le dispositif d'étanchéité comprend un ressort axial (104) ;
dans lequel le ressort axial (104) est adapté à presser l'élément racleur (101) dans un sens axial par rapport à l'arbre rotatif (301).

4. Dispositif de roulement lubrifié à l'huile selon l'une des revendications 1 à 3,
dans lequel l'élément racleur (101) comprend un rebord radial (103) dans un sens radial vers l'arbre rotatif (301) ;
dans lequel le rebord radial (103) comprend une forme incurvée dans un sens circonférentiel de l'arbre rotatif (301) ;
dans lequel la courbure de la forme incurvée correspond à la courbure de l'arbre rotatif (301).

5. Dispositif de roulement lubrifié à l'huile selon l'une des revendications 1 à 4,
dans lequel l'élément racleur (101) comprend un matériau racleur ;
dans lequel la dureté du matériau racleur est inférieure à une dureté d'un matériau de l'arbre rotatif (301).

6. Dispositif de roulement lubrifié à l'huile selon la revendication 5,
dans lequel le matériau racleur comprend un matériau polyamide.

7. Dispositif de roulement lubrifié à l'huile selon l'une des revendications 1 à 6, comprenant en outre
une plaque d'extrémité intérieure (303), et
une plaque d'extrémité extérieure (304) ;
dans lequel la plaque d'extrémité intérieure (303) et la plaque d'extrémité extérieure (304) sont adaptées à créer une cavité annulaire (401) autour de l'arbre rotatif (301) ;
dans lequel le dispositif d'étanchéité (100) est adapté à être installé dans la cavité annulaire (401).

8. Dispositif de roulement lubrifié à l'huile selon la revendication 7, comprenant en outre:
un joint annulaire en feutre (402);
dans lequel le joint annulaire en feutre (402) est adapté à être situé dans la cavité annulaire (401) et adapté à prévenir une fuite de lubrifiant entre au moins l'une des plaques d'extrémité et l'arbre rotatif (301).

9. Dispositif de roulement lubrifié à l'huile selon la revendication 7 ou 8, comprenant en outre:
un dispositif de carter de lubrifiant;
dans lequel la cavité annulaire (401) est adaptée à être connectée au dispositif de carter de lubrifiant pour retourner le lubrifiant raclé du dispositif d'étanchéité (100) jusqu'au dispositif de carter de lubrifiant.

10. Dispositif de roulement lubrifié à l'huile selon l'une des revendications 7 à 9, comprenant en outre:
un autre dispositif d'étanchéité (320) selon l'une des revendications 1 à 6 ;
une autre plaque d'extrémité intérieure (303) ; et
une autre plaque d'extrémité extérieure (304) ;
dans lequel l'autre plaque d'extrémité intérieure (303) et l'autre plaque d'extrémité extérieure (304) sont adaptées à créer une autre cavité annulaire (401) autour de l'arbre rotatif (301) ; et
dans lequel l'autre dispositif d'étanchéité (320) est adapté à être installé dans l'autre cavité annulaire (401).

11. Procédé d'étanchéisation d'un dispositif de roulement lubrifié à l'huile (300) d'une éolienne, le procédé comprenant ;
le support d'un élément racleur (101) par le dispositif de roulement (300) ;
le pressage de l'élément racleur (101) contre un arbre rotatif (301) qui est supporté par le dispositif de roulement (300) ;
le raclage du lubrifiant de l'arbre rotatif (301) par l'élément racleur (101),
dans lequel l'élément racleur (101) est adapté à être pressé contre une plaque d'extrémité du dispositif de roulement (300) de telle façon que l'élément racleur (101) est guidé par la plaque d'extrémité ;
dans lequel l'élément racleur (101) comprend une forme trapézoïdale ;
dans lequel un petit côté de la section transversale trapézoïdale comprend un rebord axial (102) dans un sens axial vers l'arbre rotatif (301) ; et
dans lequel le rebord axial (102) est adapté à être pressé contre la plaque d'extrémité.
